Europäisches Patentamt

(19) European Patent Office

Office européen des brevets

(11) Publication number: **0 140 421**
**B1**

(12) EUROPEAN PATENT SPECIFICATION

(45) Date of publication of patent specification: **27.12.90**

(21) Application number: **84201376.5**

(22) Date of filing: **26.09.84**

(51) Int. Cl.⁵: **F 16 J 15/32**

(54) Sealing ring for a rotary shaft.

(30) Priority: **05.10.83 NL 8303411**

(43) Date of publication of application:
**08.05.85 Bulletin 85/19**

(45) Publication of the grant of the patent:
**27.12.90 Bulletin 90/52**

(84) Designated Contracting States:
**DE FR GB IT NL SE**

(56) References cited:
**DE-A-2 264 042**
**FR-A-2 174 498**
**FR-A-2 431 081**
**FR-A-2 441 774**
**FR-A-2 456 888**

(73) Proprietor: **SKF Industrial Trading &**
**Development Company B.V.**
**Kelvinbaan 16 P.O. Box 50**
**NL-3430 AB Nieuwegein (NL)**

(72) Inventor: **Bras, Johan Chr. M.**
**Bantamlaan 7**
**Tricht (NL)**
Inventor: **Wevers, Willem H.**
**Trumanstede 9320**
**Goes (NL)**

(74) Representative: **Merkelbach, B.**
**SKF Engineering & Research Centre B.V. P.O.**
**Box 2350**
**NL-3430 DT Nieuwegein (NL)**

Courier Press, Leamington Spa, England.

## Description

The invention concerns a sealing ring for a rotary shaft which serves to retain and/or return a lubricant, comprising a generally annular supporting member made of a relatively rigid material and a generally annular sealing member made of an elastic material and connected with the latter, which comprises a sealing lip projecting radially inward, which at its extremity is limited by a sealing edge which, in assembled state, is in contact along a contact surface with the peripheral surface of the shaft, so that one side of the sealing edge is directed toward the lubricant and the other side toward the atmosphere, where, at the atmospheric side projections spaced apart are formed on the lip, the radially inner edge of each of which projections, in assembled state, rests against the said shaft, the contact surfaces thereby formed and being limited by bottom edges which run from a point at a distance from the adjacent limiting edge of the contact surface of the sealing edge obliquely toward the said limiting edge, with inclusion of a sharp angle, whereby the sealing lip is formed such that, in assembled state, the contact surface by which the sealing edge of the lip is in contact with the said shaft is, at the lubricant side, at least partially limited by edges running obliquely with respect to the center line of the said shaft.

Such a sealing ring is disclosed in the German patent 2.264.042. According to this disclosure, however, is between the sealing edge and the said projections a slit present which during rotation of the shaft admits sideward pressures by the lubricant against the projection and the edge. This situation will result into less good working of the seal as well as early damage of the projections, particular due to lack of sufficient sideward support.

The object of the invention is to improve a sealing ring of the type mentioned in such a way that it provides an optimal hydrodynamic seal with a longer service life in comparison with the known sealing ring.

This object is accomplished in that the said projections at least at their mid-parts are connected to the sealing edge.

To further improve the sealing, preferably between the projections at the atmospheric side of the sealing lip a second sealing lip is provided.

In this way, when the shaft rotates, a pumping effect is exerted on the lubricant present owing to the inclined edge(s) of the contact surface, as a result of which there is formed under the sealing lip, between the contact surface and the shaft, a film of lubricant which is sufficiently thick to practically eliminate the friction between the contact surface and the shaft. Although it is true that more lubricant leaks between the contact surface and the shaft, it has been found that owing to the hydrodynamic projections this fairly great flow of lubricant directed outward can be reversed, so that no lubricant is lost.

In a first embodiment, at the lubricant side of the sealing edge are formed second projections, spaced apart, on the sealing lip, the lower edge of each of which projections, in assembled state, rests against the shaft so that the contact surface of the sealing edge at the lubricant side is limited by first edge portions perpendicular to the center line of the shaft and edge portions placed in between and comprising at least one edge portion which runs outward from a first edge portion obliquely with respect to the center line of the shaft, with inclusion of a sharp angle by the said first edge portion, these second projections being staggered, with respect to the first projections, at the atmospheric side of the sealing lip.

In this connection, the second projections are preferably formed such that the contact surfaces along which their bottom edges are in contact with the shaft have the shape of a mushroom, so that between each of the aforesaid first edge portions are present two edge portions running in opposing directions obliquely with respect to the center line of the shaft, which edge portions are connected together at their extremities by a third edge portion.

In a second embodiment the sealing lip is formed in such a way that the contact surface of the sealing edge of the lip is limited by two mutually parallel edges running zigzag, so that at the lubricant side the contact surface is limited by edge portions all of which run obliquely with respect to the center line of the shaft, the first projections, at the atmospheric side of the sealing lip, being provided at the angular point of the contact surface pointing toward the side.

Instead of by edges running zigzag, the sealing lip may alternatively be formed such that the contact surface of the sealing edge of the lip is limited by two mutually parallel, essentially sinusoidal edges, the first projections being provided on the atmospheric side of the lip at the tops of the contact surface pointing toward the side.

In the simplest embodiment of the invention the sealing lip is formed such that the contact surface of the sealing edge of the lip is limited by two mutually parallel edges which run obliquely with respect to the center line of the shaft.

To increase the hydrodynamic effect, a second sealing lip may advantageously be provided between the first projections at the atmospheric side of the lip.

It is noted that British Patent 1220985 discloses a hydrodynamic sealing ring of the present type where it is stated that, in a rotating shaft, the hydrodynamic effect causes each drop of oil which is leaked to the outside to be pressed back again, whereby the friction between the contact surface of the sealing lip and the shaft is locally reduced and the service life of the sealing ring thereby increased. Thus, here no oil film of a given thickness is formed by means of a special shaping of the sealing lip whereby an oil flow is generated from the inside outward.

The invention is described in greater detail with reference to the embodiments shown in the drawing.

Figure 1 shows, in radial cross section, a first embodiment of the sealing ring pursuant to the invention, wherein under this cross section the contact surface between the sealing lip and the periphery of the shaft, laid out in a plane surface, is represented, with some cross-section lines, the associated cross sections of which are illustrated at the right thereof.

Figure 2 shows, in radial cross section, a portion of a sealing ring pursuant to a second embodiment, with the contact surface between the sealing lip and the shaft laid out in a plane surface.

Figure 3 shows, in radial cross section, a portion of a sealing ring pursuant to a third embodiment, with the contact surface between the sealing lip and the shaft being laid out in a plane surface.

Figure 4 shows, in radial cross section, a fourth embodiment of the sealing ring pursuant to the invention.

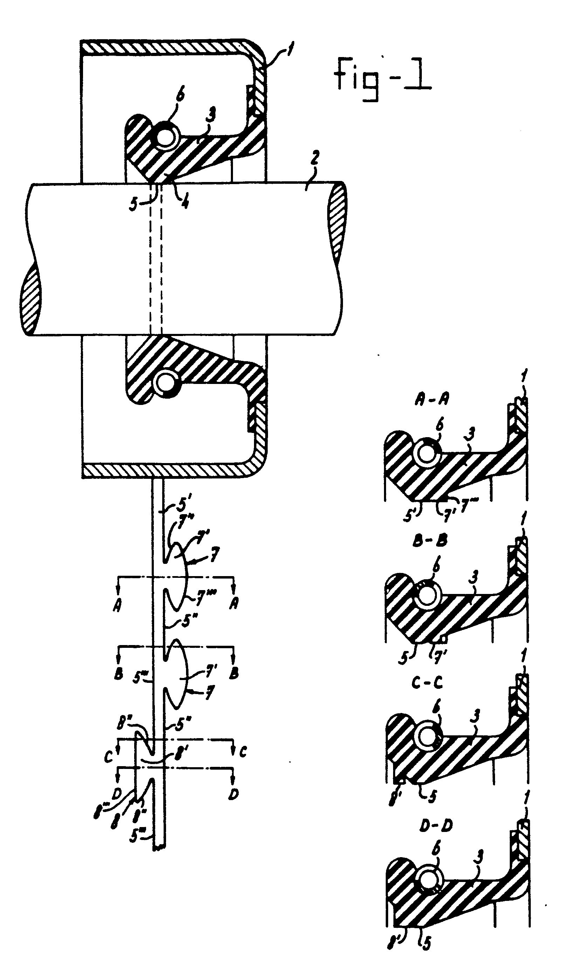

As shown in Figure 1, the sealing ring comprises an annular supporting member 1 of a relatively rigid material which may be accommodated in a manner not shown in the bearing housing of the shaft 2. An annular sealing member 3, made of an elastic material, is attached to the said supporting member 1. The sealing ring has a sealing lip 4, projecting radially inward, which at its extremity is limited by the sealing edge 5, which is in contact along the contact surface 5' with the periphery of the shaft 2, an extra pressure being obtained by means of the spiral spring band 6. The left-hand edge of the sealing lip 4 in Figure 1 is directed toward the lubricant and the right-hand edge toward the atmosphere.

As shown at the bottom of Figure 1, in a state of the contact surface 5' laid out in a plane surface, at the atmospheric side of the sealing lip 4 are formed projections 7, spaced apart, the lower edges of which rest along the contact surfaces 7' against the shaft 2. These contact surfaces 7' are at the same time limited by edges 7'' which run obliquely toward the adjacent limiting edge 5'' of the contact surface 5' with inclusion of a sharp angle. These obliquely running edges 7'' are connected together by the edges 7''' running in one direction.

At the lubricant side are formed the projections 8, the bottom edges of which are in contact along the contact surface 8' with the shaft 2. The said contact surface 8' is limited by two limiting edges 8'', running in opposite directions obliquely to the limiting edge 5''' of the contact surface 5', and an edge 8''' connecting these edges 8'' together, so that the contact surface 8' has the shape of a mushroom.

In operation, when the shaft 2 rotates, the projections 8 will exert a pumping effect on the lubricant, by which, depending upon the direction of rotation of the shaft 2, the lubricant is pressed between an inclined edge 8'' and the abutting edge 5''', whereby a film of lubricant is formed between the contact surface 5' and the periphery of the shaft 2. The lubricant flow thus generated, directed from the inside outward, is reversed by the projections 7, whereby a lubricant flow directed from the outside inward is formed and no lubricant is lost.

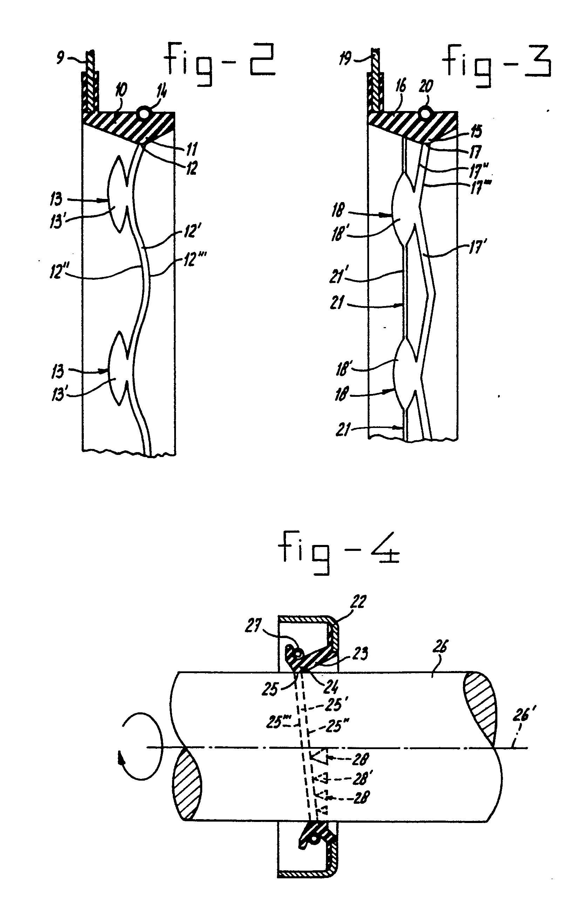

As illustrated in Figure 2, the annular sealing member 10, connected with the supporting member 9, has a sealing lip 11 shaped such that the sealing edge 12 forms a contact surface 12' with the shaft, not shown, which surface is limited by two mutually parallel, essentially sinusoidal edges 12'' and 12'''. On the atmospheric side of the sealing lip 11, at the left-hand side in Figure 2, are formed projections 13 where the limiting edge 12'' forms tops. The projections 13 are formed in the same manner as shown in Figure 1 for the projections 7, the projections 13 being in contact with the contact surfaces 13'.

In this embodiment a pumping effect is exerted by the sinusoidal edge 12''' on the lubricant present, whereby a film of lubricant is formed between the contact surface 12' and the periphery of the shaft. The flow of lubricant thereby produced is again reversed by the projections 13.

In the embodiment represented in Figure 3 the sealing lip 15 of the sealing member 16 is formed such that the sealing edge 17 forms a contact surface 17' with the shaft, not shown, which surface is limited by two mutually parallel edges 17'', 17''' running zigzag. On the atmospheric side of the sealing lip 5, placed at the left in Figure 3, are formed the projections 18, where the limiting edge 17'', running zigzag, has angular points pointing toward the edge. The projections 18 are formed in the same way as the projections 7 in Figure 1, so that the bottom edge of the projections 18 are in contact along the contact surfaces 18' with the shaft. In addition, the supporting member 19 and the spring band 20 are likewise shown.

Additionally shown in Figure 3 is a second sealing lip 21 which is provided between the projections 18 and which is in contact with the shaft along the contact surface 21'. The flow of lubricant generated from the inside outward is more reliably reversed by this second sealing lip than by the projections 18 alone, as a result of the pumping effect of the inclined limiting edges 17'''.

Such a second sealing lip may alternatively be provided in the embodiments pursuant to Figures 1 and 2.

In Figure 4 is represented a sealing ring consisting of an annular supporting member 22 made of a relatively rigid material and a generally annular sealing member 23, made of an elastic material and connected with the latter, which comprises a sealing lip 24, projecting radially inward, which at its extremity is limited by a sealing edge 25, which along the contact surface 25' is in contact with the shaft 26, an extra pressure being obtained by the spiral spring band 27. Here the sealing lip 24 is formed such that the contact surface 25' is limited by two limiting edges 25'', 25''' running parallel to one another and extending obliquely with respect to the center line 26' of the shaft 26. Projections 28 are formed, in the same way as represented in Figure 1, on the atmospheric side of the sealing lip 24, shown at the right-hand side in Figure 4, the bottom edges of which projections are in contact along the contact surfaces 28' with the shaft 26.

In this embodiment, the limiting edge 25''', running obliquely with respect to the center line 26', will likewise exert a pumping effect on the lubricant present, whereby a film of lubricant is formed between the contact surface 25' and the periphery of the shaft 26, as well as a lubricant flow directed from the inside outward, which, however, is reversed by the projections 28.

A second sealing lip, as indicated in Figure 3 by 21, may alternatively be provided here between the projections 28.

**Claims**

1. Sealing ring for a rotary shaft (2) which serves to retain and/or return a lubricant, comprising a generally annular supporting member (1) made of a relatively rigid material and a generally annular sealing member (3) made of an elastic material and connected with the latter, which comprises a sealing lip (4) projecting radially inward, which at its extremity is limited by a sealing edge (5) which, in assembled state, is in contact along a contact surface with the peripheral surface of the shaft (2), so that one side of the sealing edge is directed toward the lubricant and the other side toward the atmosphere, where, at the atmospheric side projections (7) spaced apart are formed on the lip, the radially inner edge of each of which projections, in assembled state, rests against the said shaft, the contact surfaces (7') thereby formed being limited by bottom edges (7'') which run from a point lying at a distance from the adjacent limiting edge (5'') of the contact surface of the sealing edge (5) obliquely toward the said limiting edge, with inclusion of a sharp angle, whereby the sealing lip (4) is formed such that, in assembled state, the contact surface by which the sealing edge of the lip is in contact with the said shaft is, at the lubricant side, at least partially limited by edges running obliquely with respect to the center line of the said shaft characterized in that, said projections (7; 13; 18; 28) at least at their mid-parts are connected to the sealing edge (5; 12; 17; 25).

2. Sealing ring according to claim 1, characterized in that between the projections (18) at the atmospheric side of the sealing lip (15) a second sealing lip (21) is provided.

**Patentansprüche**

1. Radial-Wellendichtung zur Zurückhaltung oder Zurückleitung eines Schmiermittels mit einem im wesentlichen ringförmigen Stützelement (1) aus einem relativ steifen Material und einem damit verbundenen im wesentlichen ringförmigen Dichtungselement (3) aus einem elastischen Material, welches eine radial nach innen sich erstreckende Dichtungslippe (4) aufweist, die an ihrem äußersten Ende durch eine Dichtungskante (5) begrenzt ist und die im montierten Zustand entlang einer Kontaktfläche mit der Umfangsfläche der Welle (2) in Berührung ist, so daß eine Seite der Dichtungskante dem Schmiermittel und die andere Seite der Atmosphäre zu gerichtet ist, wobei auf der Seite oder Atmosphäre voneinander beabstandete Vorsprünge (7) auf der Lippe ausgebildet sind und die radial innere Kante eines jeden Vorsprunges im montierten Zustand an der Welle anliegt, und die dadurch gebildeten Berührungsflächen (7') durch Basiskanten (7'') begrenzt sind, die von einem Punkt, der in einem Abstand von der benachbarten Begrenzungskante (5'') der Berührungsfläche der Dichtungskante (5) liegt, unter Einschluß eines spitzen Winkels schräg zu der genannten Begrenzungskante hin laufen, wobei die Dichtungslippe (4) derartig geformt ist, daß im montierten Zustand die Berührungsfläche, mit der die Dichtkante der Lippe mit der Welle in Berührung steht, auf der Schmiermittelseite mindestens zum Teil durch Kanten begrenzt ist, die in bezug auf die Mittellinie der Welle schräg verlaufen, dadurch gekennzeichnet, daß die Vorsprünge (7; 13; 18; 28) mindestens an ihren Mittelteilen mit der Dichtungskante (5; 12; 17; 25) verbunden sind.

2. Radial-Wellendichtung nach Anspruch 1, dadurch gekennzeichnet, daß zwischen Vorsprüngen (18) auf der Atmosphärenseite der Dichtungslippe (15) eine zweite Dichtungslippe (21) vorgesehen ist.

**Revendications**

1. Bague d'étanchéité pour un arbre tournant (2) qui sert à retenir et (ou) à renvoyer un lubrifiant, comprenant un élément de support (1) de forme annulaire dans son ensemble et constitué d'un matériau relativement rigide et un élément d'étanchéité (3) de forme annulaire dans son ensemble et constitué d'un matériau élastique et relié à ce dernier élément, qui comporte une lèvre d'étanchéité (4) formant une saillie radialement dirigée vers l'intérieur, qui est limitée à son extrémité par un bord d'étanchéité (5) lequel, en position de montage, est en contact avec la surface périphérique de l'arbre (2) le long d'une surface de contact, de sorte qu'un côté du bord d'étanchéité est dirigé vers le lubrifiant et l'autre côté vers l'atmosphère, où, du côté atmosphère, des saillies espacées (7) sont formées sur la lèvre, le bord radialement intérieur de chacune de ces saillies, en position de montage, s'appuie contre l'arbre, les surfaces de contact (7') ainsi formées étant limitées par des bords inférieures (7'') qui partent d'un point situé à une certaine distance du bord limite contigu (5'') de la surface de contact bord d'étanchéité (5) obliquement vers ce bord limite, en formant un angle vif, de sorte que la lèvre d'étanchéité (4) a une forme telle que, en position de montage, la surface de contact par laquelle le bord d'étanchéité de la lèvre est en contact avec l'arbre est, du côté lubrifiant, au moins partiellement limitée par des bords se prolongeant obliquement par rapport à l'axe de l'arbre, caractérisé en ce que ces saillies (7; 13; 18; 28), du moins dans leurs parties intermédiaires, sont reliées au bord d'étanchéité (5; 12; 17; 25).

2. Bague d'étanchéité suivant la revendication 1, caractérisée en ce qu'une deuxième lèvre d'étanchéité (21) est prévue entre les saillies (18), du côté atmosphère de la lèvre d'étanchéité (15).

**EP 0 140 421 B1**

fig-1

A-A

B-B

C-C

D-D

fig-2

fig-3

fig-4